# EUROPEAN PATENT APPLICATION

(11) **EP 1 528 085 A1**
(43) Date of publication of application: **04.05.2005**
(21) Application number: 03024800.9
(22) Date of filing: 30.10.2003
(51) Int. Cl.: C09B 69/04, C09B 69/02, G11B 7/24

(54) **New triarylmethane / bis-azo metal complex dye compounds for optical data recording**

(71) Applicant: CLARIANT INTERNATIONAL LTD., 4132 Muttenz (CH)
(72) Inventor: Pflieger, Dominique, 68130 Tagsdorf (FR); Steffanut, Pascal, 68680 Kemps-Loechlé (FR)

(57) **Abstract**

The present invention relates to new triarylmethane / bis-azo metal complex dye compounds and their use as dyes in optical layers for optical data recording, preferably for optical data recording using a laser with a wavelength from 630 to 670 nm.

The invention further relates to an optical layer comprising said dyes and to a write only read many (WORM) type optical recording medium capable of recording and reproducing information with radiation of red laser, which employs an triarylmethane / bis-azo metal complex type dye in the optical layer.

In particular, the present invention relates to crystal violet / bis-azo metal complex dye compounds and their use as dyes in optical layers for optical data recording

## Description

The present invention relates to new triarylmethane / bis-azo metal complex dye compounds and their use as dyes in optical layers for optical data recording, preferably for optical data recording using a laser with a wavelength from 630 to 670 nm. The invention further relates to an optical layer comprising said dyes and to a write only read many (WORM) type optical recording medium capable of recording and reproducing information with radiation of a red laser, which employs a triarylmethane / bis-azo metal complex type dye in the optical layer.

Recently, organic dyes have attracted considerable attention in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stability, durability for storage and non-toxicity.

For industrial application, organic dyes in the field of diode-laser optical storage have to be suitable for the spin coating process to prepare thin films, i.e. they have to be sufficiently soluble in the organic solvents generally applied in the spin coating process.

Write only read many (WORM) type and erasable type optical recording media reproduce information by detecting variations in the reflectivity caused by physical deformation, by alterations of optical characteristics as well as by phase properties and magnetic properties of a recording layer before and after the recording.

Recordable compact discs with storage capabilities up to 680 MBytes (CD-R) are an example of a WORM type optical recording medium. Recently, digital versatile discs (DVD) with increased information storage capabilities up to 4.7 GBytes and the respective DVD-R have been commercialized.

The DVD-R technology currently adopts as a light source a red diode laser with a wavelength of 630-670 nm. Thereby the pit size and track interval can be reduced, increasing the information storage capacity by up to 6-8 times compared to CD-R's.

Blu-ray® discs (Blu-ray® disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) are going to be the next milestone in optical recording technology. Its new specification increases the data storage up to 27 GBytes per recording layer for a 12 cm diameter disc. By adopting a blue diode laser with a wavelength of 405 nm (e.g. by use of GaN or SHG laser diodes), the pit size and track interval can be further reduced, again increasing the storage capacity by an order of magnitude.

The construction of optical data recording media is known in the art. An optical data recording media generally comprises a substrate and a recording layer, the optical layer. Usually discs or wavers of organic polymeric materials are used as substrates. Preferred substrates are polycarbonate (PC) or polymethylmethacrylate (PMMA). The substrate has to provide an even and uniform surface of high optical quality. The optical layer is deposited thereon in a thin and uniform film of high optical quality and defined thickness. Finally, a reflective layer, e.g. silver, gold or copper, is deposited upon the optical layer.

Advanced optical data recording media may comprise further layers, such as protective layers, adhesive layers or additional optical layers.

To provide for a thin and uniform film of the optical layer, the material is usually deposited by spin coating, vacuum evaporation, jet coating, rolling coating, or soaking. The preferred process in industry is spin coating to form an optical layer of about 70 nm to 250 nm thickness. For the application in the spin coating process, the material of the optical layer has to be highly soluble in organic solvents.

Triarylmethane derivatives are known in the art as suitable counterions or quenchers for electronic and optical materials. In particular the tris(4-(N,N-dimethylamino)phenyl)methane (commercially available as crystal violet) is known as counterion in various combinations (JP 10181206 (Ricoh, **1998**), JP61032793 (Ricoh, **1986**), JP61019395 (Ricoh, **1986**))

Surprisingly it has now been found that compounds comprising cationic triarylmethane derivatives and anionic bis-azo metal complexes provide for high lightfastness and are useful as dye compounds in optical layers for optical data recording media, in particular for DVD-R optical data recording media.

The present invention therefore in general terms relates to dye compounds comprising cationic triarylmethane derivatives and anionic bis-azo metal complexes, to an optical layer comprising said dye compounds and to a write only read many (WORM) type optical data recording medium capable of recording and reproducing information with radiation of a laser, preferably of a red laser at a wavelength from 630 to 670 nm, most preferably at around 650 nm, which employs a dye compound comprising cationic triarylmethane derivatives and anionic bis-azo metal complexes in the optical layer.

More particularly, the invention relates to optical layers comprising cationic crystal violet and anionic bis-azo metal complexes as dye compound and to the use of said dye compound as optical layers for optical recording media.

The present invention relates to a dye compound of the formulae (I) or (II) comprising cationic triarylmethane derivatives and anionic bis-azo metal complexes. 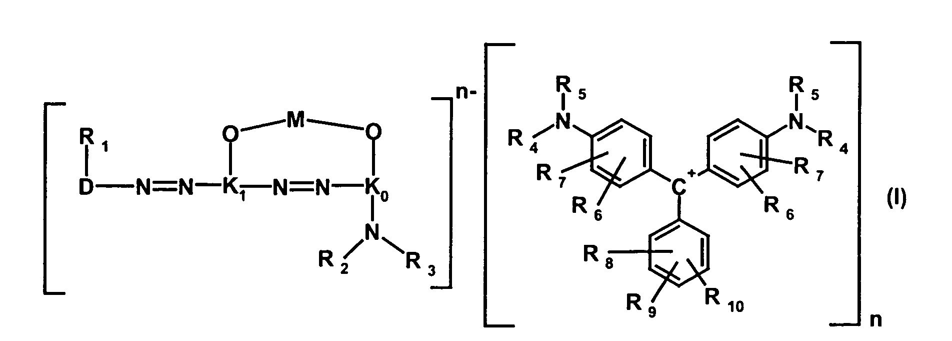 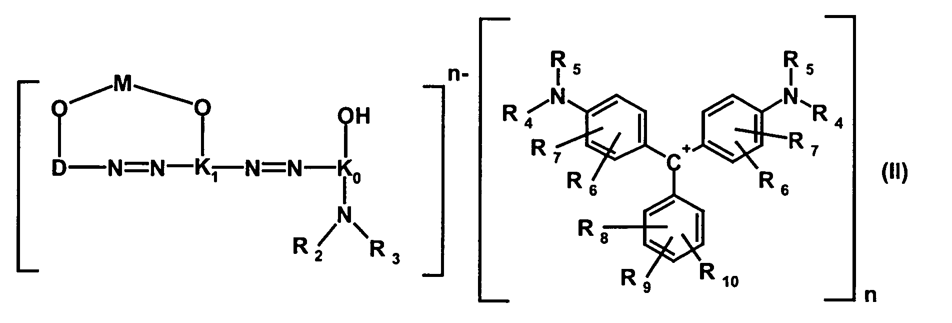 wherein
- n: is 1, 2, 3, 4, 5 or 6 and corresponds to the total number of anionic groups (M⁻, CO₂⁻ and SO₃⁻) located on the bis-azo metal complexe moiety of the molecule;
- M: represents a metal atom,
- R₁: represents hydrogen, hydroxyl, amino or aminoalkyl;

- D: is the residue of a diazo component D' substituted by at least one sulfonate, carboxylate, N-C₁₋₆alkyl-, N-C₆₋₁₀aryl, N-C₁₋₆alkoxyalkyl-sulfamyl group with the diazo component D' being selected from the group consisting of substituted or unsubstituted phenyl, substituted or unsubstituted naphtyl;
- K₁: is the residue of a coupling component K₁' being selected from the group consisting of substituted or unsubstituted phenol, substituted or unsubstituted naphtol,
- K₀: is the residue of a coupling component K₀' being selected from the group consisting of substituted or unsubstituted phenol, substituted or unsubstituted naphtol,
with the substituents of the phenyl, naphtyl, phenol and naphtol in D, K₀ and K₁ being hydroxy, methyl, methoxy or halogen, preferably chloro,
and wherein the components D, K₀ and K₁ are substituted with at least n' sulfonate or carboxylate groups,
- R₂ and R₃: independently of each other, represent hydrogen, alkyl, alkoxyalkyl, cycloalkyl, dialkylamino-alkyl, aryl, heteroaryl or R₂ and R₃ together with the N atom to which they are bonded, form a heterocyclic 5, 6 or 7- membered ring, optionally with participation of further hetero atoms selected from the group consisting of O, N, S;
- R₄ and R₅: independently of each other, represent hydrogen, alkyl, alkoxyalkyl, cycloalkyl, aryl, dialkylamino-alkyl, aryl, arylsulfonyl, alkylarylosulfonyl, heteroaryl, alkoxy, alkylthio, aryloxy or arylthio;
- R_{6,}R₇, R_{8,} R₉, R₁₀: independently of each other, represent hydrogen, hydroxy, halogen (F, Cl, Br, I), cyano, nitro, alkyl, aryl, amino, alkylamino, dialkylamino, arylamino, diarylamino, dialkylamino-alkyl, heteroaryl, alkoxy, alkylthio, aryloxy, arylthio, SO₃H, SO₂NR₁₁R₁₂, CO₂R₁₁, CONR₁₁R₁₂, NHCOR₁₁, wherein
R₁₁ is selected from hydrogen, C₁₋₆alkyl, C₆₋₁₀aryl or C₁₋₆alkoxy and
R₁₂ is selected from hydrogen, C₁₋₆alkyl, C₆₋₁₀aryl or C₁₋₆alkoxy.

Preferred dye compounds according to the invention can be described by the general formulae (III) or (IV) 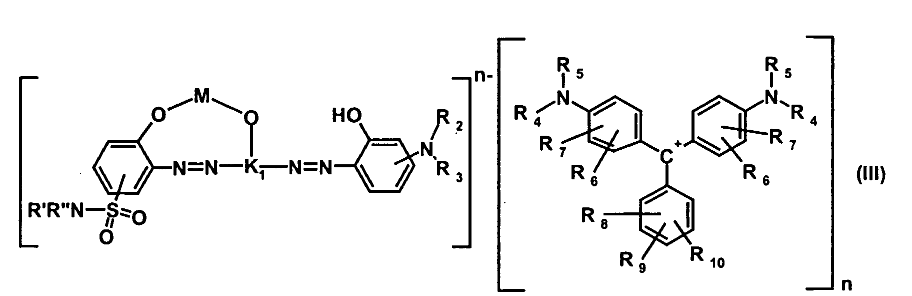 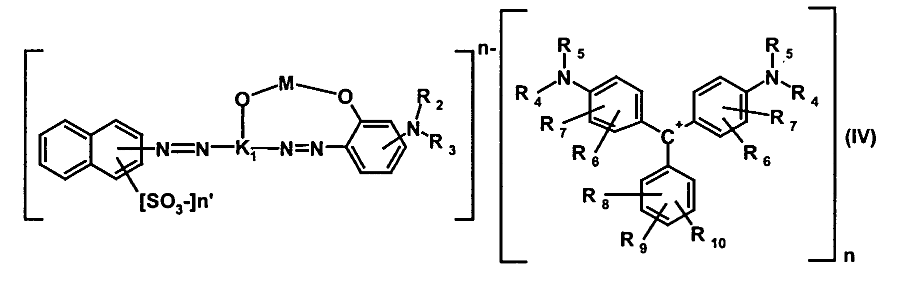 wherein
- n: is 1, 2, 3 or 4 and corresponds to the total number of anionic groups (M⁻, CO₂⁻ and SO₃⁻) located on the bis-azo metal complexe moiety of the molecule;
- n': is 1, 2, 3 or 4;
- M: is selected from the group consisting of Fe, Ni, Co, Cr, Cu, Al;
- K₁: is defined as above;

- R₂ and R₃: independently of each other, represent hydrogen, C₁₋₄alkyl, C₁₋₄alkoxyalkyl, C₅₋₆cycloalkyl, C₆₋₁₀aryl, or
R₂ and R₃ together with the N atom to which they are bonded, form a heterocyclic ring selected from the group consisting of pyrolidino, piperidino or morpholino;
- R₄ and R₅: independently of each other, represent hydrogen, C₁₋₄alkyl, C₁₋₄alkoxyalkyl, C₅₋₆cycloalkyl or C₆₋₁₀aryl;
- R₆, R₇, R_{8,} R₉: independently of each other, represent hydrogen, hydroxy, halogen (F, Cl, Br, I), cyano (CN), nitro (NO₂), C₁₋₄alkyl, C₁₋₄alkoxyalkyl, C₅₋₆cycloalkyl or C₆₋₁₀aryl; amino, C₁₋₄alkyl amino, C₁₋₄ dialkylamino, C₆₋₁₀aryl amino, C₆₋₁₀diarylamino, C₁₋₄alkoxy, C₁₋₄alkylthio, C₆₋₁₀- aryloxy, C₆₋₁₀arylthio, SO₃H, SO₂NR₁₁R₁₂, CO₂R₁₂, CONR₁₁R₁₂, NHCOR₁₂, wherein
R₁₁ is hydrogen, C₁₋₄alkyl and
R₁₂ is hydrogen, C₁₋₆alkyl;
- R₁₀: is C₁₋₄ dialkylamino;

- R': is selected from hydrogen, C₁₋₆alkyl, C₆₋₁₀aryl or N-C₁₋₆alkoxyalkyl and
- R": is selected from hydrogen, C₁₋₆alkyl, C₆₋₁₀aryl or N-C₁₋₆alkoxyalkyl.

In a more preferred embodiment, the invention relates to dye compounds of the formulae (V) or (VI) 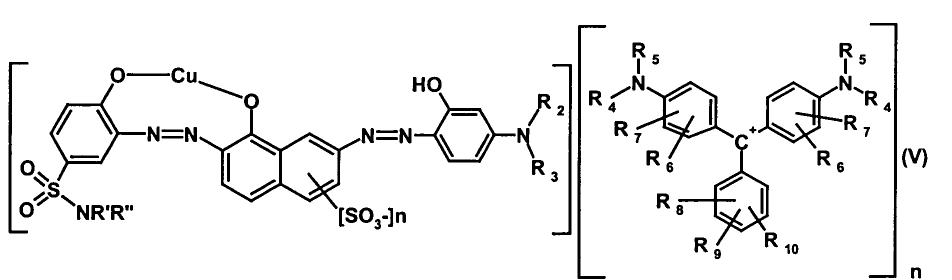 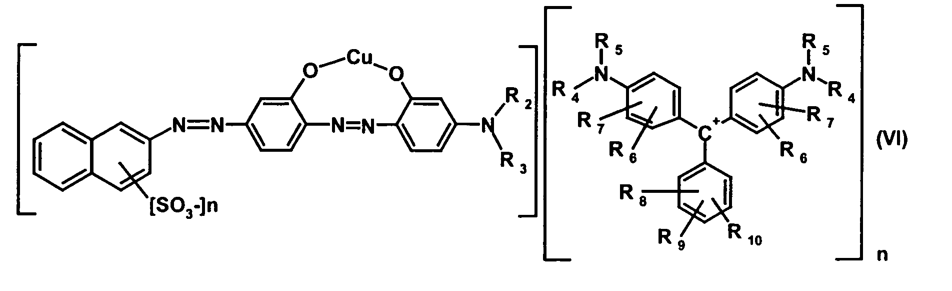 wherein
- n: is 1, 2 or 3;
- M: is selected from the group consisting of Fe, Ni, Cu, Al;
- R₂ and R₃: independently of each other, represent hydrogen, C₁₋₄alkyl, or R₂ and R₃ together with the N atom to which they are bonded, form a heterocyclic ring selected from the group consisting of pyrolidino, piperidino or morpholino;
and the amino group bearing R₂ and R₃ is in the 4- or 5- position of the phenyl ring.
- R₄ and R₅: independently of each other, represent hydrogen or C₁₋₄alkyl;
- R₆, R₇, R_{8,} R₉: represent hydrogen;
- R₁₀: is C₁₋₄ dialkylamino in the 4-position of the phenyl ring;
- R': is hydrogen and
- R": is selected from methyl, ethyl, n-propyl, phenyl, n-methoxypropyl, methoxyethyl or ethoxyethyl.

In a most preferred embodiment, the invention relates to dye compounds as described above, wherein
- n: is 1 or 2 and corresponds to the total number of anionic groups (M⁻, CO₂⁻ and SO₃⁻) located on the bis-azo metal complexe moiety of the molecule;
- M: is selected from the group consisting of Ni or Cu;

- R₂ and R₃: independently of each other, represent C₁₋₄alkyl, and the amino group bearing R₂ and R₃ is in the 4- position of the phenyl ring;
- R₄ and R₅: independently of each other, represent C₁₋₄alkyl;
- R₆, R₇, R_{8,} R₉: represent hydrogen;
- R₁₀: is dimethylamino in the 4-position of the phenyl ring.

The most preferred triarylmethane derivative used in the dye compounds according to the invention is the cation of tris(4-(N,N-dimethylamino)-phenyl)methane, which is commercially available as crystal violet:

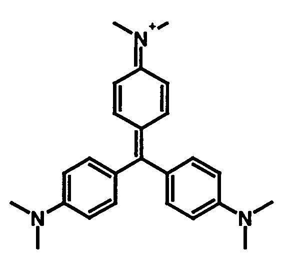

The present invention further relates to an optical layer comprising at least one dye compound of formula (I) to (VI).

An optical layer according to the invention may also comprise a mixture of two or more, preferably of two dye compounds of formula (I) to (VI) as defined above.

Further, the invention relates to a method for producing optical layers comprising the following steps
(a) providing a substrate
(b) dissolving a dye compound (or a mixture of dye compounds) of formula (I) to (VI) in an organic solvent to form a solution,
(c) coating the solution (b) on the substrate (a);
(d) evaporating the solvent to form a dye layer.

Preferred substrates are polycarbonate (PC) or polymethylmethacrylate (PMMA).

The recording layer is obtained usually by spin coating a of coating fluid comprising an organic colorant dissolved in an organic solvent, onto a disc substrate.
Industrially applied organic solvents are selected from ethanol, 3-hydroxy-3-methyl-2-butanone, diacetone alcohol or fluorinated alcohols.

Preferred solvents are fluorinated alcohols having at least 3 carbon atoms and a boiling point of from 100 to 150°C. Examples of such fluorinated alcohols are 1H,1H,3H-tetrafluoropropanol, 1H,1H,5H-octafluoropentanol or 1H,1H,3H-hexafluorobutanol.

The optical layer (dye layer) preferably has a thickness from 70 to 250 nm.

In a further aspect, the present invention provides for an optical layer suitable for a high-density recording medium, e.g. of the WORM disc format, in a laser wavelength range of from 500 to 700 nm, preferably from 630 to 670 nm and most preferably around 650 nm.

The dye compounds of formulae (I) to (VI) possess the required optical characteristics (such as high absortivity and high recording sensitivity), an excellent solubility in organic solvents, an excellent light stability and a decomposition temperature of 230-300°C.

### Preparation of the triarylmethane bis-azo metal complex dye compounds

The triarylmethane bis-azo metal complex dye compounds of formula (I) to (VI) are obtained by condensing compound (A) with compound (B) in the ratio that is needed for equilibrating the charges.

For metallazo-triarylmethane dye compounds of formula (I) to (VI), compound A is a triarylmethane salt, preferably a triarylmethane halide. Compound B is a 1:1 metal complex of a bis-azo salt, preferably a 1:1 metal complex of a bis-azo alkali salt.

The process for preparation can be described by the following steps
(a) an azo-coupling reaction to form a bivalent ligand,
(b) a chelating reaction with a metal salt,
(c) a cation exchange on the negatively charged azo salt with a cationic triarylmethane salt.

The solvents used in the process are selected from the group consisting of C₁₋₈ alcohols, glycols, glycol ethers, polyglycols, polyglycol ethers, esters, glycol esters, aromatics, dimethylformamide, N-methylpyrolidone or a mixture of one of these solvents with water or water itself.

Preferred solvents used in the process are ethanol, methanol, propanol, butanol, methoxypropanol and dipropyleneglycolbismethylether.

Preferably, the complexes are prepared by reaction of a solution of metal-azo salt with a boiling solution of the corresponding chloro salt of the triarylmethane dye. The precipitate is isolated following standard methods.

### Preparation of high density optical disc recording medium

The preparation of a high density optical recording medium / high density optical disc conventionally comprises the following steps:
(a) providing a first substrate
(b) dissolving the dye in an organic solvent to form a solution,
(c) coating the first solution on the first substrate;
(d) drying the solution to form a dye layer and
(e) disposing a reflection layer on the dye layer and
(f) disposing a second substrate on the reflection layer

In step (f), preferably a second substrate is bonded with the first substrate to form the high-density optical disc recording medium. Conventional techniques for bonding are printing, glueing or melting.

### EXAMPLES

All metallazo-triarylmethane dye compounds were prepared using standard procedures known in the art, involving reaction of the appropriate metal-azo complex with the corresponding chloro salt of the triarylmethane dye in a 1:1 molar ratio in a mixture of water and ethanol.
The metallazo-triarylmethane dye compounds can be purified by recrystallization e.g. from an alcohol.

### Example 1

a) 264.1 parts of 2-amino-4-(3'-methoxypropylamino-sulfonyl) phenol are stirred into a mixture of 2000 parts of water and 350 parts of 30% HCl. After the addition of 500 parts of ice, the amine is diazotised by the addition of 305 parts by volume of 4N NaNO₂ solution. The resulting suspension is stirred for 3 hours at 0°C and then slowly poured into a solution of 203.6 parts of 2-amino-8-hydroxynaphthalene-6-sulfonic acid (gamma acid) in 600 parts of water and 123.7 parts of 30% NaOH. By the simultaneous addition of a further 130.0 parts of 30% NaOH, the pH is brought to 9.5-10. The resulting mixture is then stirred at room temperature for 8 hours and brought to pH 1.5 by the addition of 30% HCl. The resulting precipitate is filtered and dried.
b) 15.3 parts of the monoazo dyestuffs of part a) above are stirred into a mixture of 150 parts of water, 4.5 parts of 30% NaOH and 8.3 parts by volume of 4N NaNO₂ solution. The resulting solution is slowly poured into 100 parts of ice and 24.7 parts of 30% HCl resulting in a suspension of diazonium salt that is stirred for 2 hours at 5°C. This slurry is slowly poured into a solution of 5.1 parts of 3-(diethylamino)phenol in 50.0 parts of ethanol and 50.0 parts of water. By the simultaneous addition of a 5.0 parts of sodium carbonate, the pH is brought to 8.0-8.5. The resulting mixture is then stirred at room temperature for 8 hours and brought to pH 1.5 by the addition of 30% HCl. The resulting voluminous precipitate build-up is filtered and dried.
c) 6.2 parts of the bisazo dyestuffs of part b) above are suspended in 100 parts of water and 2.5 parts of sodium acetate. After warming at 96°C for over one hour, a solution of 2.3 parts of copper sulphate in 15.0 parts of water are added for over one hour, whereupon a voluminous suspension of the copper complex results. The temperature is allowed to fall to 45°C over 2 hours (while stirring well) and the suspension is slowly reacted with a solution of 3.7 parts of {4-[bis-(4-dimethylamino-phenyl)-methylene]-cyclohexa-2,5-dienylidene}-dimethylammonium chloride (e.g. commercial product known as crystal violet) in 75 parts of ethanol. The resulting precipitate is stirred a further hour at room temperature, filtered and the residue is washed salt free with deionised water and dried. A compound (9.1g) of formula (1) is obtained. 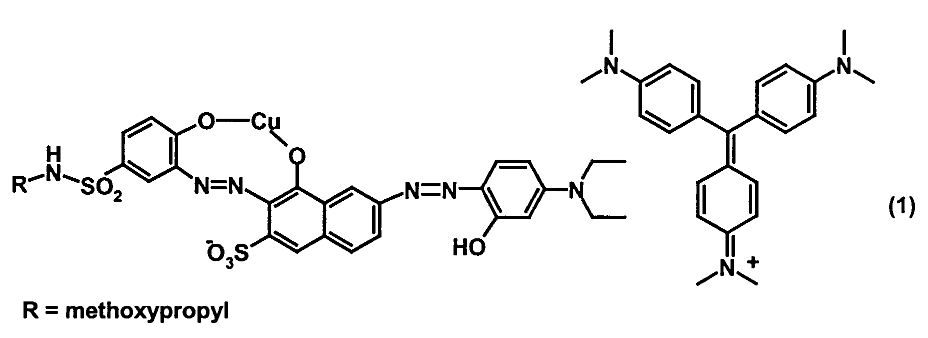
Yield: 89%; Decomp. point (DSC; sharp): 237°C; UV-Vis (EtOH) λₘₐₓ: 584 nm;
ε (λₘₐₓ): 118000 l.mol⁻¹.cm⁻¹

### Example 2

a) 9.6 parts of 1,3-Naphthalenedisulfonic acid, 7-[(4-amino-3-methoxyphenyl)azo]-, disodium salt (CAS Registry Number 65151-26-0) are stirred into a mixture of 200 parts of water and 8.2 parts of 30% HCl. After the addition of 100 parts of ice, the amine is diazotised by the addition of 5.0 parts by volume of 4N NaNO₂ solution. The resulting solution of diazonium salt is stirred for 1 hours at 5°C and the excess of sodium nitrite is destroyed with aminosulfonic acid. The orange solution is then slowly poured into a solution of 3.4 parts of -(diethylamino)phenol in 30 parts of water and 30 parts of ethanol. By the simultaneous addition of 3.0 parts of 30% NaOH,, the pH is brought to 8.5-9.0. The resulting mixture is then stirred at room temperature for 3 hours and brought to pH 1.5 by the addition of 30% HCl. 50 parts of sodium chloride are added and the resulting orange precipitate build-up is filtered and dried.
b) 4.3 parts of the bisazo dyestuffs of part a) above are stirred into 100 parts of water and 1.7 parts of diethanolamine. It is heated to 98°C before slowly adding a slurry made from 1.8 parts of copper sulphate, 2.8 parts of water and 2.8 parts of 25% ammonia heated to 60°C. The reaction mixture is heated to reflux for 4 hours whereupon a dark red solution of the copper complex results. The reaction mixture is cooled down to 25°C and is reacted with a solution of 5.7 parts of {4-[bis-(4-dimethylamino-phenyl)-methylene]-cyclohexa-2,5-dienylidene}-dimethylammonium chloride (e.g. commercial product known as crystal violet) in 115 parts of ethanol. The resulting precipitate is stirred a further hour at room temperature, filtered and the residue is washed salt free with deionised water and dried.. A compound (9.0g) of formula (2) is obtained. 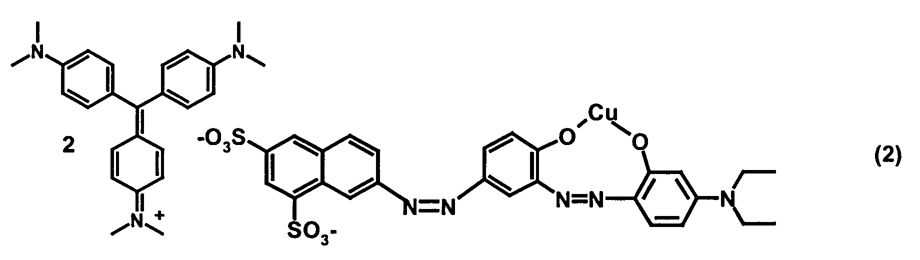
Yield: 92%; Decomp. point (DSC; sharp): 230°C; UV-Vis (EtOH) λₘₐₓ: 586 nm;
ε (λₘₐₓ): 148800 l.mol⁻¹.cm⁻¹

### Optical and thermal properties

Optical and thermal properties of the new compounds based on triarylmethane and metalazo combinations were studied. The new dyes show high absorption at the desired wavelengths. In particular, the new dyes showed higher absorption at the desired wavelengthes than the metalazo component or the triarylmethane component alone.
In addition, the shape of the absorption spectra, that still remains critical to the disc reflectivity and formation of clean mark edges, are composed of two major bands wherein the second one, close to 600 nm, is higher.
More precisely, n values of the refractive index were evaluated between 2.3 and 2.7. Light stabilities were found comparable to the commercial dyes which usually are stabilised with quenchers for the use in optical data recording.
Sharp thresold of thermal decomposition in the required temperature range characterizes the new dyes, which is assumed to be desirable for the application in optical layers for optical data recording.
As a remark, the metal-azo complexes without triarylmethane as counter ions, usually do not decompose very sharply but melt in most cases.

### Example 3

0.30 g of the dye of formula (1) obtained from example 1 were dissolved in 10 ml of tetrafluoropropanol, and stirred at room temperature for 5 hours. The solution was filtered with a Teflon filter (having 0,2 µm pore size) and spin coated over a substrate to form a dye layer. The substrate was a polycarbonate substrate with 0.6 mm thickness having pregrooves with 170 nm depth, 330 nm width and 800 nm track pitch.

The substrate having the dye layer was dried in a vacuum oven set at 70°C for 10 minutes. The optical layers obtained had a uniform and even surface at a thickness of 90 nm.
As a reflective layer, silver was deposited over the dye layer with a thickness of 100 nm. An acrylic UV curable resin was spin-coated over the reflective layer and then cured by radiation of UV rays to form a protective layer.
Finally, the substrate with the reflective layer and the recording layer was combined with another blank substrate with a thickness of 0.6 mm. The final product is a high-density recordable optical disc of about 120 mm diameter.

To evaluate the final product a PULSTEC DDU-1000 evaluation test machine was used to write and read the test results.

The recording conditions were: constant linear velocity (CLV) at 3.5 m/s, wavelength at 658 nm, numerical aperture (NA) at 0.6, and writing power from 7-14 mW. The reading conditions were: CLV at 3.5 m/s, wavelength at 658nm, NA at 0.6, and reading power from 0.5 to 1.5 mW.

The tests provided for results within the expectations with regard to absorptivity, reflectance and recording sensitivity. Further, the obtained optical layers were sufficiently stable to light and heat. The optical recording media were storage stable within specification.

### Example 4

Optical recording media with an optical layer comprising the dyes obtained according to example 2 were manufactured and tested according to the procedure given for example 3.

As the results of examples 3 and 4 clearly indicate, the compounds of examples 1 and 2 are suitable for the use in optical layers for optical data recording media with very good results.

## Claims

1. A dye compound of the formulae (I) or (II) comprising cationic triarylmethane derivatives and anionic 1:1 bis-azo metal complexes 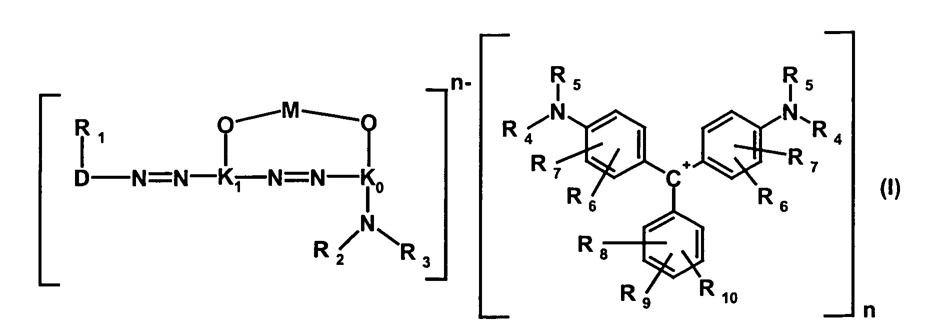 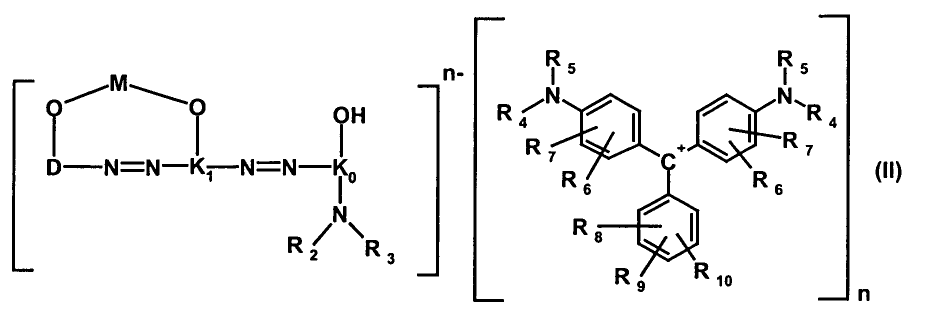 wherein
n is 1, 2, 3, 4, 5 or 6 and corresponds to the total number of anionic groups (M⁻, CO₂⁻ and SO₃⁻) located on the bis-azo metal complexe moiety of the molecule;
M represents a metal atom,
R₁ represents hydrogen, hydroxyl, amino or aminoalkyl;
D is the residue of a diazo component D' substituted by at least one sulfonate, carboxylate, N-C₁₋₆alkyl-, N-C₆₋₁₀aryl, N-C₁₋₆alkoxyalkyl-sulfamyl group with the diazo component D' being selected from the group consisting of substituted or unsubstituted phenyl, substituted or unsubstituted naphtyl;
K₁ is the residue of a coupling component K₁' being selected from the group consisting of substituted or unsubstituted phenol, substituted or unsubstituted naphtol,
K₀ is the residue of a coupling component K₀' being selected from the group consisting of substituted or unsubstituted phenol, substituted or unsubstituted naphtol,
with the substituents of the phenyl, naphtyl, phenol and naphtol in D, K₀ and K₁ being hydroxy, methyl, methoxy or halogen, preferably chloro,
and wherein the components D, K₀ and K₁ are substituted with at least n' sulfonate or carboxylate groups,
R₂ and R₃ independently of each other, represent hydrogen, alkyl, alkoxyalkyl, cycloalkyl, dialkylamino-alkyl, aryl, heteroaryl or R₂ and R₃ together with the N atom to which they are bonded, form a heterocyclic 5, 6 or 7- membered ring, optionally with participation of further hetero atoms selected from the group consisting of O, N, S;
R₄ and R₅ independently of each other, represent hydrogen, alkyl, alkoxyalkyl, cycloalkyl, aryl, dialkylamino-alkyl, aryl, arylsulfonyl, alkylarylosulfonyl, heteroaryl, alkoxy, alkylthio, aryloxy or arylthio;
R_{6,}R₇, R_{8,} R₉, R₁₀ independently of each other, represent hydrogen, hydroxy, halogen (F, Cl, Br, I), cyano, nitro, alkyl, aryl, amino, alkylamino, dialkylamino, arylamino, diarylamino, dialkylamino-alkyl, heteroaryl, alkoxy, alkylthio, aryloxy, arylthio, SO₃H, SO₂NR₁₁R₁₂, CO₂R₁₁, CONR₁₁R₁₂, NHCOR₁₁, wherein
R₁₁ is selected from hydrogen, C₁₋₆alkyl, C₆₋₁₀aryl or C₁₋₆alkoxy and
R₁₂ is selected from hydrogen, C₁₋₆alkyl, C₆₋₁₀aryl or C₁₋₆alkoxy.

2. A dye compound according to claim 1, of the formulae (III) or (IV) 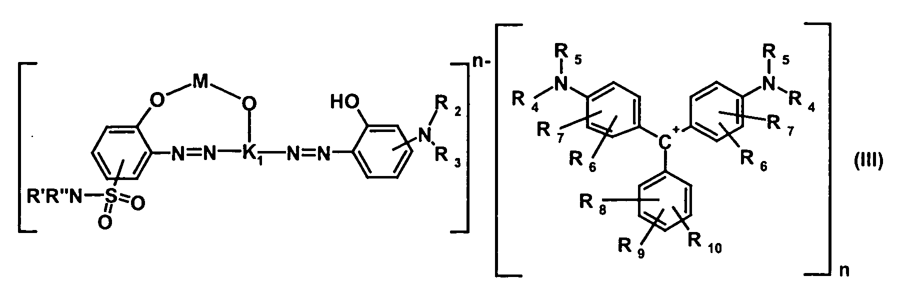 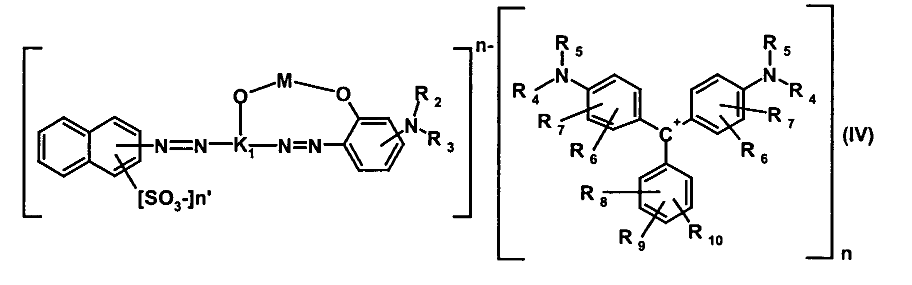 wherein
n is 1, 2, 3 or 4 and corresponds to the total number of anionic groups (M', CO₂⁻ and SO₃⁻) located on the bis-azo metal complexe moiety of the molecule;
n' is 1, 2, 3 or 4;
M is selected from the group consisting of Fe, Ni, Co, Cr, Cu, Al;
K₁ is defined as in claim 1;
R₂ and R₃ independently of each other, represent hydrogen, C₁₋₄alkyl, C₁₋₄alkoxyalkyl, C₅₋₆cycloalkyl, C₆₋₁₀aryl, or
R₂ and R₃ together with the N atom to which they are bonded, form a heterocyclic ring selected from the group consisting of pyrolidino, piperidino or morpholino;
R₄ and R₅ independently of each other, represent hydrogen, C₁₋₄alkyl, C₁₋₄alkoxyalkyl, C₅₋₆cycloalkyl or C₆₋₁₀aryl;
R₆, R₇, R_{8,} R₉ independently of each other, represent hydrogen, hydroxy, halogen (F, Cl, Br, I), cyano (CN), nitro (NO₂), C₁₋₄alkyl, C₁₋₄alkoxyalkyl, C₅₋₆cycloalkyl or C₆₋₁₀aryl; amino, C₁₋₄alkyl amino, C₁₋₄ dialkylamino, C₆₋₁₀aryl amino, C₆₋₁₀diarylamino, C₁₋₄alkoxy, C₁₋₄alkylthio, C₆₋₁₀aryloxy, C₆₋₁₀arylthio, SO₃H, SO₂NR₁₁R₁₂, CO₂R₁₂, CONR₁₁R₁₂, NHCOR₁₂, wherein
R₁₁ is hydrogen, C₁₋₄alkyl and
R₁₂ is hydrogen, C₁₋₆alkyl;
R₁₀ is C₁₋₄ dialkylamino;
R' is selected from hydrogen, C₁₋₆alkyl, C₆₋₁₀aryl or N-C₁₋₆alkoxyalkyl and
R" is selected from hydrogen, C₁₋₆alkyl, C₆₋₁₀aryl or N-C₁₋₆alkoxyalkyl.

3. A dye compound according to claims 1 or 2 of the formulae (V) or (VI) 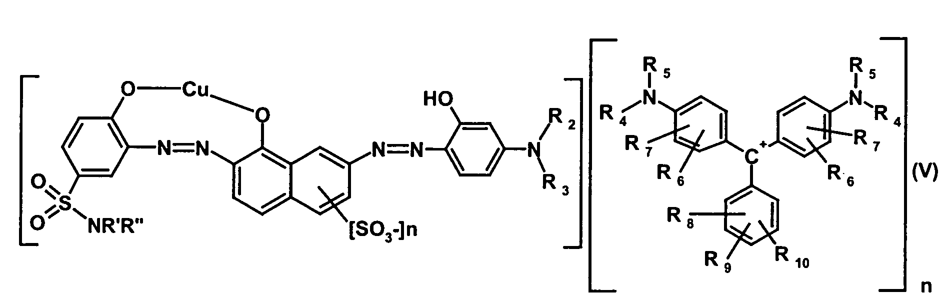 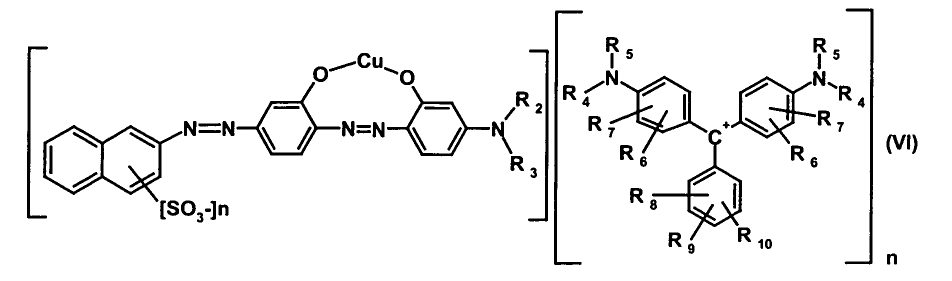 wherein
n is 1, 2 or 3;
M is selected from the group consisting of Fe, Ni, Cu, Al;
R₂ and R₃ independently of each other, represent hydrogen, C₁₋₄alkyl, or
R₂ and R₃ together with the N atom to which they are bonded, form a heterocyclic ring selected from the group consisting of pyrolidino, piperidino or morpholino;
and the amino group bearing R₂ and R₃ is in the 4- or 5- position of the phenyl ring.
R₄ and R₅ independently of each other, represent hydrogen or C₁₋₄alkyl;
R₆, R₇, R_{8,} R₉ represent hydrogen;
R₁₀ is C₁₋₄ dialkylamino in the 4-position of the phenyl ring;
R' is hydrogen and
R" is selected from methyl, ethyl, n-propyl, phenyl, n-methoxypropyl, methoxyethyl or ethoxyethyl.

4. A dye compound according to claim 3, wherein
n is 1 or 2 and corresponds to the total number of anionic groups (M⁻, CO₂⁻ and SO₃⁻) located on the bis-azo metal complexe moiety of the molecule;
M is selected from the group consisting of Ni or Cu;
R₂ and R₃ independently of each other, represent C₁₋₄alkyl, and the amino group bearing R₂ and R₃ is in the 4- position of the phenyl ring;
R₄ and R₅ independently of each other, represent C₁₋₄alkyl;
R₆, R₇, R_{8,} R₉ represent hydrogen;
R₁₀ is dimethylamino in the 4-position of the phenyl ring.

5. An optical layer comprising a dye compound of the formula (I) to (VI) according to claims 1 to 4.

6. A method for producing optical layers according to claim 5, comprising the following steps
(a) providing a substrate,
(b) dissolving a dye compound of the formula (I) to (VI) according to claims 1 to 4 in an organic solvent to form a solution,
(c) coating the solution (b) on the substrate (a);
(d) evaporating the solvent to form a dye layer.

7. A method according to claim 6, wherein the substrate is polycarbonate (PC) or polymethylmethacrylate (PMMA).

8. A method according to claim 6, wherein the organic solvent is selected from C₁₋₈ alcohols, halogen substituted C₁₋₈ alcohols, C₁₋₈ ketones, C₁₋₈ ether, halogen substituted C₁₋₄ alkanes, or amides.

9. A method according to claim 6, wherein
the C₁₋₈ alcohols or halogen substituted C₁₋₈ alcohols are selected from methanol, ethanol, isopropanol, diacetone alcohol (DAA), 2,2,3,3-tetrafluoropropanol, trichloroethanol, 2-chloroethanol, octafluoropentanol or hexafluorobutanol;
the C₁₋₈ ketones are selected from acetone, methylisobutylketone, methylethylketone, or 3-hydroxy-3-methyl-2-butanone;
the halogen substituted C₁₋₄ alkanes are selected from chloroform, dichloromethane or 1-chlorobutane; and the amides are selected from dimethylformamide or dimethylacetamide.

10. A method according to claim 6, wherein the optical layer (dye layer) has a thickness from 70 to 250 nm.

11. An optical recording medium comprising an optical layer, wherein at least one dye compound of the formula (I) to (VI) according to claims 1 to 4 is used.

12. A method for producing an optical recording medium according to claims 11, comprising the following steps
(a) providing a first substrate
(b) dissolving a dye compound of the formula (I) to (VI) according to claims 1 to 4 in an organic solvent to form a solution,
(c) coating the solution (b) on the first substrate (a),
(d) evaporating the solvent to form a dye layer,
(e) disposing a reflection layer on the dye layer and
(f) disposing a second substrate on the reflection layer.
